# EUROPEAN PATENT APPLICATION

(11) **EP 4 671 835 A1**
(43) Date of publication of application: **31.12.2025**
(21) Application number: 23923793.6
(22) Date of filing: 24.11.2023
(51) Int. Cl.: G02B 6/12

(54) **ARRAY WAVEGUIDE GRATING**

(30) Priority: 21.02.2023 CN 202310140368
(71) Applicant: Innolight Technology (Suzhou) Ltd., Suzhou, Jiangsu 215000 (CN)
(72) Inventor: TENG, Min, Suzhou, Jiangsu 215000 (CN); ZHENG, Xuezhe, Suzhou, Jiangsu 215000 (CN)
(74) Representative: Becker, Eberhard
(86) International application number: PCT/CN2023/133983
(87) International publication number: WO 2024/174630

(57) **Abstract**

The present application relates to an array waveguide grating. The array waveguide grating comprises an input coupler, a waveguide array and an output coupler, wherein the waveguide array is coupled between the input coupler and the output coupler, and the waveguide array comprises a plurality of waveguides; the input coupler is used for allocating received optical signals to the plurality of waveguides, and the waveguides are used for guiding the allocated optical signals; and the output coupler is used for coupling the optical signals, which are transmitted on the plurality of waveguides. The input coupler has a first refractive index, each waveguide has a second refractive index, and the output coupler has a third refractive index, wherein the first refractive index and the third refractive index are both greater than the second refractive index. The array waveguide grating can solve both the problem of an insertion loss of a star coupler being relatively high and the problem of a phase error being relatively large due to the roughness of a side wall of a waveguide, and insertion loss of the array waveguide grating is relatively low.

## Description

This application claims the priority of the China patent application filed with the China Patent Office on February 21, 2023, with application number 202310140368.7 and invention title "Array Waveguide Grating", all contents of which are incorporated by reference in this application.

### TECHNICAL FIELD

The invention relates to the field of semiconductor techniques, and in particular to an array waveguide grating.

### BACKGROUND ART

Array waveguide gratings are commonly used in optical multiplexers in wavelength division multiplexing systems. These devices may combine many wavelengths of light into a single optical fiber, thereby improving the propagation efficiency of optical fiber networks.

Array waveguide gratings include star couplers and waveguide arrays. On the one hand, if the insertion loss of the star coupler needs to be reduced, the channel spacing of the star coupler (the channel spacing of the star coupler refers to the interval between two adjacent channels of the star coupler) often needs to be reduced, thus significantly increasing the evanescent wave crosstalk formed by the two adjacent channels. Moreover, waveguide arrays are readily limited by the process (such as affected by factors such as the roughness of the sidewalls of the waveguides in the waveguide array), resulting in larger phase errors, which in turn leads to larger insertion loss in the channels of the waveguide array, increased crosstalk, and spectrum drift.

### SUMMARY OF THE INVENTION

Accordingly, it is necessary to provide an array waveguide grating to address the issue of higher insertion loss of the star coupler and the issue of larger phase error caused by the roughness of the sidewalls of the waveguides of the waveguide array.

The present application provides an array waveguide grating including an input coupler, a waveguide array, and an output coupler;
the waveguide array is coupled between the input coupler and the output coupler, the waveguide array includes a plurality of waveguides, the input coupler is used to allocate a received optical signal to the plurality of waveguides, the plurality of waveguides are used to guide an allocated optical signal, and the output coupler is used to couple optical signals transmitted on the plurality of waveguides;
wherein the input coupler has a first refractive index, the plurality of waveguides have a second refractive index, the output coupler has a third refractive index, and both the first refractive index and the third refractive index are greater than the second refractive index.

In one of the embodiments, the first refractive index and the third refractive index are both greater than 3, and the second refractive index is less than 2.5.

In one of the embodiments, the input coupler is manufactured by adopting a high-precision photolithography process; and/or
the output coupler is manufactured by adopting a high-precision photolithography process.

In one of the embodiments, materials of the input coupler and the output coupler both include silicon.

In one of the embodiments, the waveguides include a temperature-insensitive material.

In one of the embodiments, a material of the waveguides includes silicon nitride or silicon oxynitride.

In one of the embodiments, a number of the waveguides is n, the input coupler is used to allocate a received light into m optical signals and couple the m optical signals to the n waveguides for transmission, and the output coupler is used to couple optical signals transmitted on the n waveguides and output p optical signals;
wherein m, n, and p are all positive integers greater than 1, and m is greater than or equal to n.

In one of the embodiments, m is greater than n, the input coupler includes n first coupling channels, the output coupler includes n second coupling channels, and the waveguides are coupled between the first coupling channels and the second coupling channels in a one-to-one correspondence;
the input coupler also includes a monitoring channel and/or a dumping channel, and a total number of the monitoring channels and the dumping channels is m-n.

In one of the embodiments, the waveguides include two gradient sections respectively coupled to the corresponding first coupling channel and the corresponding second coupling channel; the first coupling channel includes a first portion coupled to a bottom side of the corresponding gradient section, and the second coupling channel includes a second portion coupled to a bottom side of the corresponding gradient section;
along a longitudinal extension direction of the waveguides pointing to a side away from the input coupler, a width of the gradient section coupled to the input coupler is gradually increased, and a width of the gradient section coupled to the output coupler is gradually decreased; a width of the first portion is gradually decreased, and a width of the second portion is gradually increased; or along a direction from the input coupler to the output coupler, a thickness of the gradient section coupled to the input coupler is gradually increased, and a thickness of the gradient section coupled to the output coupler is gradually decreased; a thickness of the first portion is gradually decreased, and a thickness of the second portion is gradually increased.

In one of the embodiments, cross-sections of the plurality of waveguides are all configured as squares.

In the present application, on the one hand, the refractive index of the input coupler and the refractive index of the output coupler are higher, and both the input coupler and the output coupler may better confine the light field and reduce the crosstalk caused by evanescent wave coupling, so that the input coupler and the output coupler may be designed to have smaller channel spacing, thus facilitating the reduction of insertion loss without significantly increasing evanescent wave crosstalk. Moreover, the lower refractive index of the waveguides may reduce the phase error caused by the roughness of the sidewalls of the waveguides, thereby reducing crosstalk and insertion loss and avoiding spectrum drift. Therefore, the array waveguide grating may solve both the issue of higher insertion loss of the star coupler and the issue of larger phase error caused by the roughness of the sidewalls of the waveguides, and the insertion loss of the array waveguide grating is lower.

### DESCRIPTION OF THE DRAWINGS

FIG. 1 shows a schematic structural diagram of an array waveguide grating of the first embodiment of the present application.
FIG. 2 shows a side view of an array waveguide grating of the first embodiment of the present application.
FIG. 3 shows a schematic structural diagram of an array waveguide grating of the second embodiment of the present application.
FIG. 4 shows a schematic structural diagram of an array waveguide grating of the third embodiment of the present application.
FIG. 5 shows a schematic structural diagram of an array waveguide grating of the fourth embodiment of the present application.
FIG. 6 shows a schematic structural diagram of a cross section of a waveguide of an embodiment of the present application.
FIG. 7 shows a schematic structural diagram of an integrated chip of an embodiment of the present application.

In the figures: 10, array waveguide grating; 110, input coupler; 111, first coupling channels; 1111, first portion; 1112, third portion; 112, monitoring channels; 113, input channels; 114, first coupling waveguide; 120, waveguide array; 121, waveguides; 1211, gradient section; 1212, straight section; 130, output coupler; 131, second coupling channels; 1311, second portion; 1312, fourth portion; 132, output channels; 1321, first output channel; 1322, second output channel; 133, second coupling waveguide; S, first plane; 20, polarization rotation beam splitter; 30, photodetector.

### SPECIFIC EMBODIMENTS

To facilitate understanding of the invention, the invention is described more fully below with reference to the relevant drawings. In the accompanying drawings, a preferred embodiment of the invention is shown. This invention may, however, be embodied in many different forms and should not be construed as limited to the embodiments set forth herein. On the contrary, these embodiments are provided to make the disclosure of the invention more thorough and complete.

Unless defined otherwise, all technical and scientific terms used herein have the same meaning as commonly understood by one of ordinary skill in the art to which this invention belongs. The terms used in the specification of the invention herein are for the object of describing specific embodiments only and are not intended to limit the invention. As used herein, the term "and/or" includes any and all combinations of one or a plurality of the associated listed items.

The terminology used herein is for the object of describing particular embodiments only and is not intended to be limiting of the invention. As used herein, the singular forms "a", "one", and "the/said" are intended to also include the plural forms, unless the context clearly indicates otherwise. It should also be understood that the terms "form" and/or "include", when used in this specification, determine the presence of stated features, integers, steps, operations, elements, and/or components, but do not preclude the presence or addition of one or more other features, integers, steps, operations, elements, components, and/or groups. As used herein, the term "and/or" includes any and all combinations of the associated listed items.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be limited to the particular shapes of regions illustrated herein but are to include deviations in shapes that result, for example, from manufacturing. Thus, the regions illustrated in the figures are schematic in nature and the shapes thereof are not intended to illustrate the actual shape of a region of a device and are not intended to limit the scope of the invention.

In order to solve both the issue of higher insertion loss of the star coupler and the issue of larger phase error caused by the roughness of the sidewalls of the waveguides of the waveguide array, the present application designs an array waveguide grating. On the one hand, the star coupler uses a high refractive index material to better confine the light field and reduce the evanescent wave crosstalk, and the channel spacing may be designed to be smaller, thus facilitating the reduction of the insertion loss without significantly increasing the evanescent wave crosstalk; on the other hand, the waveguide array uses a low refractive index material to reduce the phase error caused by the roughness of the sidewalls of the waveguide; in this way, the issue of higher insertion loss of the star coupler and the issue of larger phase error caused by the roughness of the sidewalls of the waveguides of the waveguide array may be solved, and the insertion loss of the array waveguide grating may be significantly reduced.

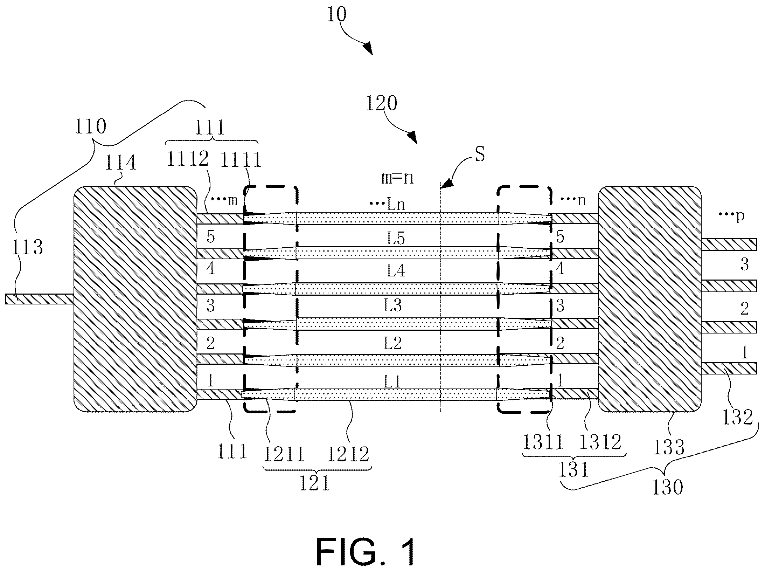

FIG. 1 to FIG. 5 show schematic structural diagrams of array waveguide gratings 10 according to different embodiments of the present application.

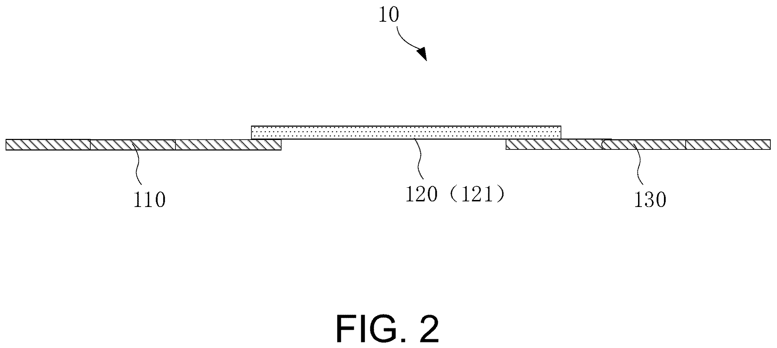

In some embodiments, referring to FIG. 1 and FIG. 2, the array waveguide grating 10 provided in an embodiment of the present application includes an input coupler 110, a waveguide array 120, and an output coupler 130.

The waveguide array 120 is coupled between the input coupler 110 and the output coupler 130, the waveguide array 120 includes a plurality of waveguides 121, the input coupler 110 is used to allocate a received optical signal to the plurality of waveguides 121, the plurality of waveguides 121 are used to guide an allocated optical signal, and the output coupler 130 is used to couple optical signals transmitted on the plurality of waveguides 121. That is, the input coupler 110 allocates the received optical signal to the plurality of waveguides 121, transmits the optical signal to the output coupler 130 via the plurality of waveguides 121, and then outputs the optical signal after coupling via the output coupler 130.

In the present embodiment, the waveguide array 120 includes n waveguides 121, the input coupler 110 is an 1×n star coupler, and the output coupler 130 is an n×p star coupler. The input coupler 110 may include 1 input channels 113 and n first coupling channels 111, and the output coupler 130 may include n second coupling channels 131 and p output channels 132.

The channel spacing of the input coupler 110 refers to the spacing between two adjacent first coupling channels 111, and the channel spacing of the output coupler 130 refers to the spacing between two adjacent second coupling channels 131.

The waveguides 121 are coupled between the first coupling channels 111 and the second coupling channels 131 in a one-to-one correspondence. Thus, an optical signal received by 1 input channels 113 is allocated to n first coupling channels 111. The optical signal allocated to each of the first coupling channels 111 is transmitted to the corresponding second coupling channel 131 via the corresponding waveguide 121, and lastly outputted via p output channels 132. That is, the output coupler 130 may output p optical signals. Therefore, when an optical signal passes through the array waveguide grating 10 from left to right, p-way wavelength separation may be achieved, and when an optical signal passes through the array waveguide grating 10 from right to left, p-way wavelength merging may be achieved.

In particular, the input coupler 110 has a first refractive index, the plurality of waveguides 121 have a second refractive index, the output coupler 130 has a third refractive index, and both the first refractive index and the third refractive index are greater than the second refractive index.

It may be understood that, on the one hand, compared with the array waveguide 120, the refractive index of the input coupler 110 and the refractive index of the output coupler 130 are higher. Taking the input coupler 110 as an example, the input coupler 110 may better bind the light field, so that light with lower energy may penetrate between the two adjacent first coupling channels 111, and may also well reduce the crosstalk generated by the evanescent wave coupling formed by the two adjacent first coupling channels 111. Similarly, the output coupler 130 may also better bind the light field and may also reduce the evanescent wave crosstalk of the output coupler 130. In this way, the input coupler 110 and the output coupler 130 may both be designed to have smaller channel spacing, thus facilitating the reduction of insertion loss without significantly increasing the evanescent wave crosstalk. Moreover, since the refractive index may be used to quantitatively describe the increase in the wave number (phase change per unit length) caused by the medium, compared with the input coupler 110 and the output coupler 130, the refractive index of the waveguides 121 is lower, which is beneficial to reducing the phase error caused by the sidewall roughness of the waveguides 121, thereby reducing crosstalk and insertion loss and avoiding spectrum drift. Therefore, the array waveguide grating 10 may solve both the issue of higher insertion loss of the star coupler and the issue of larger phase error caused by the roughness of the sidewalls of the waveguides 121, so that the insertion loss of the array waveguide grating 10 is lower.

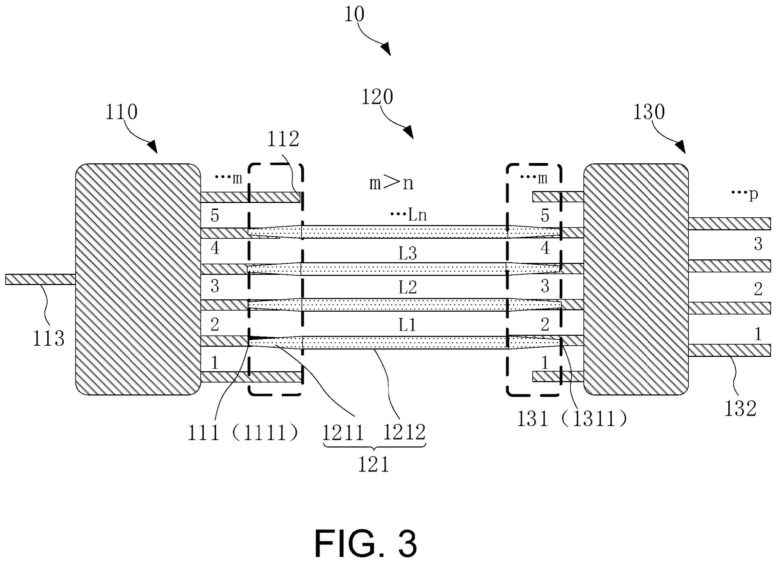

In some embodiments, referring to FIG. 3, the array waveguide grating 10 provided in an embodiment of the present application includes the input coupler 110, the waveguide array 120, and the output coupler 130.

The waveguide array 120 includes n waveguides 121, the input coupler 110 is an 1×m star coupler, the input coupler 110 is an m×p star coupler, and the input coupler 110 may include 1 input channels 113, n first coupling channels 111, and m-n first auxiliary channels, and the output coupler 130 includes n second coupling channels 131, m-n second auxiliary channels, and p output channels 132. In particular, the first auxiliary channels may be monitoring channels 112 and/or dumping channels. The second auxiliary channels may also be monitoring channels 112 and/or dumping channels.

The waveguides 121 are coupled between the first coupling channels 111 and the second coupling channels 131 in a one-to-one correspondence. Thus, an optical signal received by 1 input channels 113 is allocated to n first coupling channels 111 and m-n first auxiliary channels. The optical signal allocated to each of the first coupling channels 111 is transmitted to the corresponding second coupling channel 131 via the corresponding waveguide 121, and lastly output via p output channels 132. That is, the output coupler 130 may output p optical signals. Therefore, when an optical signal passes through the array waveguide grating 10 from left to right, p-way wavelength separation may be achieved, and when an optical signal passes through the array waveguide grating 10 from right to left, p-way wavelength merging may be achieved. The optical signal allocated to the first auxiliary channels may be used for monitoring detection (the first auxiliary channels are the monitoring channels 112), or the energy of the optical signal allocated to the first auxiliary channels may also be directly dissipated to play the role of auxiliary coupling (the first auxiliary channels are the dumping channels).

In particular, the input coupler 110 has a first refractive index, the waveguides 121 have a second refractive index, the output coupler 130 has a third refractive index, and both the first refractive index and the third refractive index are greater than the second refractive index.

It may be understood that, on the one hand, compared with the array waveguide 120, the refractive index of the input coupler 110 and the refractive index of the output coupler 130 are higher. Taking the input coupler 110 as an example, the input coupler 110 may better bind the light field, so that light with lower energy may penetrate between the two adjacent first coupling channels 111, and may also well reduce the crosstalk generated by the evanescent wave coupling formed by the two adjacent first coupling channels 111. Similarly, the output coupler 130 may also better bind the light field and may also reduce the evanescent wave crosstalk of the output coupler 130. In this way, the input coupler 110 and the output coupler 130 may both be designed to have smaller channel spacing, thus facilitating the reduction of insertion loss without significantly increasing the evanescent wave crosstalk. Moreover, since the refractive index may be used to quantitatively describe the increase in the wave number (phase change per unit length) caused by the medium, compared with the input coupler 110 and the output coupler 130, the refractive index of the waveguides 121 is lower, which is beneficial to reducing the phase error caused by the sidewall roughness of the waveguides 121, thereby reducing crosstalk and insertion loss and avoiding spectrum drift. Therefore, the array waveguide grating 10 may solve both the issue of higher insertion loss of the star coupler and the issue of larger phase error caused by the roughness of the sidewalls of the waveguides 121, so that the insertion loss of the array waveguide grating 10 is lower.

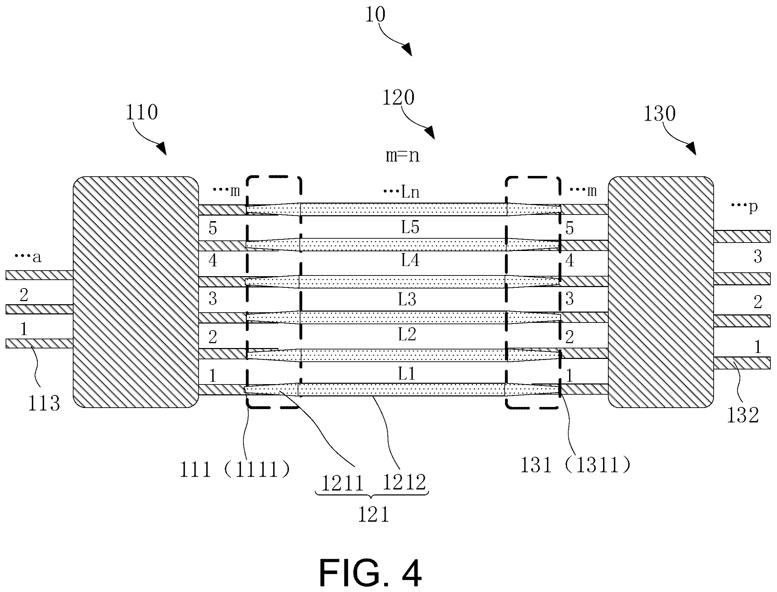

In some embodiments, referring to FIG. 4, the array waveguide grating 10 provided in an embodiment of the present application includes the input coupler 110, the waveguide array 120, and the output coupler 130.

The waveguide array 120 includes n waveguides 121, the input coupler 110 is an a×n star coupler, and the input coupler 110 is an n×p star coupler. The input coupler 110 may include a input channels 113 and n first coupling channels 111, and the output coupler 130 may include n second coupling channels 131 and p output channels 132.

The waveguides 121 are coupled between the first coupling channels 111 and the second coupling channels 131 in a one-to-one correspondence. Thus, an optical signal received by a input channels 113 is allocated to n first coupling channels 111. The optical signal allocated to each of the first coupling channels 111 is transmitted to the corresponding second coupling channel 131 via the corresponding waveguide 121, and lastly outputted via p output channels 132. That is, the output coupler 130 may output p optical signals. Thus, the optical signal may enter via the a-path and exit via the p-path from left to right via the array waveguide grating 10, and the optical signal may enter via the p-path and exit via the a-path from right to left via the array waveguide grating 10.

In particular, the input coupler 110 has a first refractive index, the waveguides 121 have a second refractive index, the output coupler 130 has a third refractive index, and both the first refractive index and the third refractive index are greater than the second refractive index.

It may be understood that, on the one hand, compared with the array waveguide 120, the refractive index of the input coupler 110 and the refractive index of the output coupler 130 are higher. Taking the input coupler 110 as an example, the input coupler 110 may better bind the light field, so that light with lower energy may penetrate between the two adjacent first coupling channels 111, and may also well reduce the crosstalk generated by the evanescent wave coupling formed by the two adjacent first coupling channels 111. Similarly, the output coupler 130 may also better bind the light field and may also reduce the evanescent wave crosstalk of the output coupler 130. In this way, the input coupler 110 and the output coupler 130 may both be designed to have smaller channel spacing, thus facilitating the reduction of insertion loss without significantly increasing the evanescent wave crosstalk. Moreover, since the refractive index may be used to quantitatively describe the increase in the wave number (phase change per unit length) caused by the medium, compared with the input coupler 110 and the output coupler 130, the refractive index of the waveguides 121 is lower, which is beneficial to reducing the phase error caused by the sidewall roughness of the waveguides 121, thereby reducing crosstalk and insertion loss and avoiding spectrum drift. Therefore, the array waveguide grating 10 may solve both the issue of higher insertion loss of the star coupler and the issue of larger phase error caused by the roughness of the sidewalls of the waveguides 121, so that the insertion loss of the array waveguide grating 10 is lower.

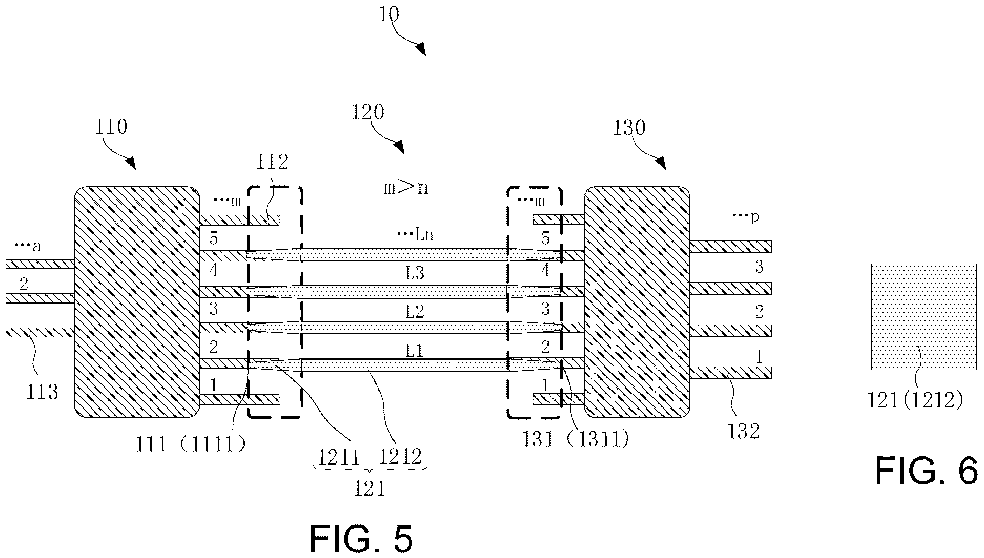

In still some embodiments, referring to FIG. 5, the array waveguide grating 10 provided in an embodiment of the present application includes the input coupler 110, the waveguide array 120, and the output coupler 130.

The waveguide array 120 includes n waveguides 121, the input coupler 110 is an a×m star coupler, the input coupler 110 is an m×p star coupler, and the input coupler 110 may include a input channels 113, n first coupling channels 111, and m-n first auxiliary channels, and the output coupler 130 includes n second coupling channels 131, m-n second auxiliary channels, and p output channels 132. In particular, the first auxiliary channels may be monitoring channels 112 and/or dumping channels. The second auxiliary channels may also be monitoring channels 112 and/or dumping channels.

The waveguides 121 are coupled between the first coupling channels 111 and the second coupling channels 131 in a one-to-one correspondence. Thus, an optical signal received by a input channels 113 is allocated to n first coupling channels 111 and m-n first auxiliary channels. The optical signal allocated to each of the first coupling channels 111 is transmitted to the corresponding second coupling channel 131 via the corresponding waveguide 121, and lastly output via p output channels 132. That is, the output coupler 130 may output p optical signals. Thus, the optical signal may enter via the a-path and exit via the p-path from left to right via the array waveguide grating 10, and the optical signal may enter via the p-path and exit via the a-path from right to left via the array waveguide grating 10. The optical signal allocated to the first auxiliary channels may be used for monitoring detection (the first auxiliary channels are the monitoring channels 112), or the energy of the optical signal allocated to the first auxiliary channels may also be directly dissipated to play the role of auxiliary coupling (the first auxiliary channels are the dumping channels).

In particular, the input coupler 110 has a first refractive index, the waveguides 121 have a second refractive index, the output coupler 130 has a third refractive index, and both the first refractive index and the third refractive index are greater than the second refractive index.

It may be understood that, on the one hand, compared with the array waveguide 120, the refractive index of the input coupler 110 and the refractive index of the output coupler 130 are higher. Taking the input coupler 110 as an example, the input coupler 110 may better bind the light field, so that light with lower energy may penetrate between the two adjacent first coupling channels 111, and may also well reduce the crosstalk generated by the evanescent wave coupling formed by the two adjacent first coupling channels 111. Similarly, the output coupler 130 may also better bind the light field and may also reduce the evanescent wave crosstalk of the output coupler 130. In this way, the input coupler 110 and the output coupler 130 may both be designed to have smaller channel spacing, thus facilitating the reduction of insertion loss without significantly increasing the evanescent wave crosstalk. Moreover, since the refractive index may be used to quantitatively describe the increase in the wave number (phase change per unit length) caused by the medium, compared with the input coupler 110 and the output coupler 130, the refractive index of the waveguides 121 is lower, which is beneficial to reducing the phase error caused by the sidewall roughness of the waveguides 121, thereby reducing crosstalk and insertion loss and avoiding spectrum drift. Therefore, the array waveguide grating 10 may solve both the issue of higher insertion loss of the star coupler and the issue of larger phase error caused by the roughness of the sidewalls of the waveguides 121, so that the insertion loss of the array waveguide grating 10 is lower. In some embodiments, the waveguide array 120 includes a set of waveguides 121 having equal length differences.

The waveguide array 120 is equivalent to one concave grating. After being transmitted via the waveguide array 120, since the adjacent waveguides 121 maintain the same length difference, the output light of a certain wavelength of the adjacent waveguides 121 on the concave grating has the same phase difference. The phase difference is different for light of different wavelengths. Therefore, light of different wavelengths is diffracted and focused to different output channel waveguide positions during transmission via the waveguide array 120. After being output via the output channel waveguide, the wavelength allocation, i.e., demultiplexing function, is completed.

In some embodiments, the first refractive index and the third refractive index are both greater than 3, and the second refractive index is less than 2.5.

It may be understood that the input coupler 110 and the output coupler 130 both adopt a high refractive index material, and the input coupler 110 and the output coupler 130 may both better confine the light field, so that the input coupler 110 and the output coupler 130 may be designed to have smaller channel spacing, thus facilitating the reduction of insertion loss without significantly increasing evanescent wave crosstalk. In addition, the second refractive index is lower to significantly reduce the phase error caused by the roughness of the sidewalls of the waveguides 121, thereby significantly reducing crosstalk and insertion loss and avoiding spectrum drift. The insertion loss of the array waveguide grating 10 is lower.

In some embodiments, the input coupler 110 is manufactured using a high-precision photolithography process. In this way, the coupling efficiency of the input coupler 110 may be improved and the insertion loss of the array waveguide grating 10 may be reduced.

In some other embodiments, the output coupler 130 is manufactured using a high-precision photolithography process. In this way, the coupling efficiency of the output coupler 130 may be improved and the insertion loss of the array waveguide grating 10 may be reduced.

In some other embodiments, both the input coupler 110 and the output coupler 130 are manufactured using a high-precision photolithography process.

It may be understood that the input coupler 110 and the output coupler 130 may be prepared by a high-precision photolithography process. Combined with the higher refractive index of the input coupler 110 and the higher refractive index of the output coupler 130, the coupling efficiency of the input coupler 110 and the output coupler 130 may be improved, and the insertion loss of the array waveguide grating 10 may be reduced.

In some embodiments, the input coupler 110 and the output coupler 130 are both high-precision partially etched star couplers. Compared with a fully etched star coupler, a partially etched star coupler has a smaller light leakage area, which is beneficial for reducing insertion loss.

In some embodiments, the materials of the input coupler 110 and the output coupler 130 both include silicon.

Silicon has a high refractive index and supports high-precision photolithography and partial etching. The input coupler 110 and the output coupler 130 may be made into high-precision partially etched star couplers by adopting high-precision photolithography to reduce the insertion loss of the input coupler 110 and the output coupler 130 and improve the coupling efficiency of the input coupler 110 and the output coupler 130.

In some embodiments, the waveguides 121 include a temperature-insensitive material.

The refractive index of the waveguides 121 is lower, and the waveguides 121 are made of non-temperature-sensitive materials to better avoid the occurrence of spectrum temperature drift.

In some embodiments, the material of the waveguides 121 includes silicon nitride or silicon oxynitride.

The waveguides 121 include but are not limited to silicon nitride or silicon oxynitride. Silicon nitride and silicon oxynitride have lower refractive indices and are non-temperature-sensitive materials, i.e., non-temperature-sensitive materials, which are beneficial to reducing the insertion loss of the array waveguide grating 10 and avoiding spectrum drift due to temperature.

In some embodiments, the number of the waveguides 121 is n, the input coupler 110 is used to allocate the received light into m optical signals and couple the m optical signals to n waveguides 121 for transmission, and the output coupler 130 is used to couple the optical signals transmitted on n waveguides 121 and output p optical signals. In particular, m, n, and p are all positive integers greater than 1, and m is greater than or equal to n.

As shown in FIG. 1 and FIG. 4, m is equal to n, and the m optical signals allocated by the input coupler 110 are transmitted via the m waveguides 121 in a one-to-one correspondence. The optical signals transmitted by the m waveguides 121 are coupled to the output coupler 130, and lastly the output coupler 130 outputs p optical signals.

As shown in FIG. 3 and FIG. 5, m is greater than n, and n optical signals among the m optical signals allocated by the input coupler 110 are transmitted via the n waveguides 121 in a one-to-one correspondence, and the optical signals transmitted by the n waveguides 121 are coupled to the output coupler 130, and lastly the output coupler 130 outputs p optical signals.

In some embodiments, as shown in FIG. 3 and FIG. 5, m is greater than n, the input coupler 110 includes n first coupling channels 111, the output coupler 130 includes n second coupling channels 131, and the waveguides 121 are coupled between the first coupling channels 111 and the second coupling channels 131 in a one-to-one correspondence. The input coupler 110 further includes the monitoring channel 112 and/or a dumping channel, and the total number of the monitoring channels 112 and the dumping channels is m-n.

The monitoring channel 112 may be used to lead out the optical path to connect a coupling component for the object of detection. The light energy may also be directly dissipated by using the dumping channel to play the role in auxiliary coupling. It should be added that the optical signal leaked from the dumping channel is less, and the effect on the insertion loss of the array waveguide grating 10 is negligible.

In some embodiments, referring to FIG. 6, the cross-sections of the plurality of waveguides 121 are all configured as squares.

Referring to FIG. 1, a plane parallel to the thickness direction of the waveguides 121 and intersected with the waveguides 121 is defined as a first plane S. The cross sections of the waveguides 121 are parallel to the first plane S. FIG. 6 shows a cross-sectional view of the waveguides 121 at the first plane S (to be understood in conjunction with FIG. 1).

The cross sections of the waveguides 121 are configured as squares. The cross section of a straight section 1212 may be configured as a square, or both the cross section of a gradient section 1211 and the cross section of the straight section 1212 may be configured as squares. No specific limitation is made herein. Designing the cross sections of the waveguides 121 to be square may reduce the polarization sensitivity of the array waveguide grating 10, which is beneficial for the array waveguide grating 10 to serve as the receiving end of a wavelength division multiplexer.

In some embodiments, the waveguides 121 include two gradient sections 1211 respectively coupled to the input coupler 110 and the output coupler 130, and a straight section 1212 connected between the two gradient sections 1211 (the straight section here is just a name, and does not limit the waveguides here to be straight lines, and the waveguides may be curved), the first coupling channels 111 include a first portion 1111 coupled to the bottom side of the corresponding gradient section 1211, and the second coupling channels 131 include a second portion 1311 coupled to the bottom side of the corresponding gradient section 1211. Along the longitudinal extension direction of the waveguides 121 pointing to the side away from the input coupler 110, the width of the gradient section 1211 coupled to the input coupler 110 is gradually increased, the width of the gradient section 1211 coupled to the output coupler 130 is gradually decreased, the width of the first portion 1111 is gradually decreased, the width of the second portion 1311 is gradually increased, and the width of the straight section 1212 remains unchanged. In this way, the mode spot size of the input coupler 110 may be gradually matched with the mode spot of the waveguides 121, thereby increasing the mode field overlap between the input coupler 110 and the waveguides 121. Similarly, the mode spot size of the waveguides 121 may be gradually matched with the mode spot of the output coupler 130, thereby increasing the mode field overlap between the waveguides 121 and the output coupler 130, thereby improving the coupling efficiency between the input coupler 110 and the output coupler 130.

In some other embodiments, along the longitudinal extension direction of the waveguides 121 pointing to the side away from the input coupler 110, the thickness of the gradient section 1211 coupled to the input coupler 110 is gradually increased, the thickness of the gradient section 1211 coupled to the output coupler 130 is gradually decreased, the thickness of the first portion 1111 is gradually decreased, the thickness of the second portion 1311 is gradually increased, and the thickness of the straight section 1212 remains unchanged.

In this way, the mode spot size of the input coupler 110 may be gradually matched with the mode spot of the waveguides 121, and the mode spot size of the waveguides 121 may be gradually matched with the mode spot of the output coupler 130, thereby improving the coupling efficiency of the input coupler 110 and the output coupler 130.

Of course, the present application is not limited thereto, and other methods may also be adopted to gradually match the mode spot size of the input coupler 110 with the mode spot of the waveguides 121 and to gradually match the mode spot size of the waveguides 121 with the mode spot of the output coupler 130, so as to improve the coupling efficiency of the input coupler 110 and the output coupler 130.

In some embodiments, the input coupler 110 also includes a first coupling waveguide 114 connected between the input channel 113 and the first coupling channel 111, the first coupling channel 111 also includes a third portion 1112, and the third portion 1112 is connected between the first coupling waveguide 114 and the first portion 1111. The first coupling waveguide 114 is used to allocate the optical signal received by the input channel 113 to a plurality of first coupling channels 111, and the optical signal allocated to the first coupling channels 111 is transmitted in sequence via the third portion 1112 and the first portion 1111 of the first coupling channels 111, and is gradually coupled to the corresponding gradient section 1211, and then transmitted to the output coupler 130 via the corresponding waveguide 121, and then output after coupling via the output coupler 130. The third portion 1112 and the first portion 1111 adopt the same material, and the first portion 1111 and the gradient section 1211 adopt different materials. The first portion 1111 may be designed to be gradient like the gradient section 1211, but the direction of the gradient width is opposite to that of the gradient section 1211.

In some embodiments, the output coupler 130 also includes a second coupling waveguide 133 connected between the second coupling channel 131 and the output channel 132. The second coupling channel 131 also includes a fourth portion 1312. The fourth portion 1312 is connected between the second portion 1311 and the second coupling waveguide 133. The optical signal transmitted in the waveguides 121 may be transmitted in sequence via the second portion 1311 and the fourth portion 1312 of the corresponding second coupling channel 131. The second coupling waveguide 133 is used to couple the optical signals transmitted in a plurality of second coupling channels 131 and allocate the optical signals to a plurality of output channels 132 so as to be output via the plurality of output channels 132. In some embodiments, when designing the array waveguide grating 10, a more appropriate arrangement pattern may be selected according to different material platforms and the number and the spacing of wavelength division channels, and no specific limitation is made herein.

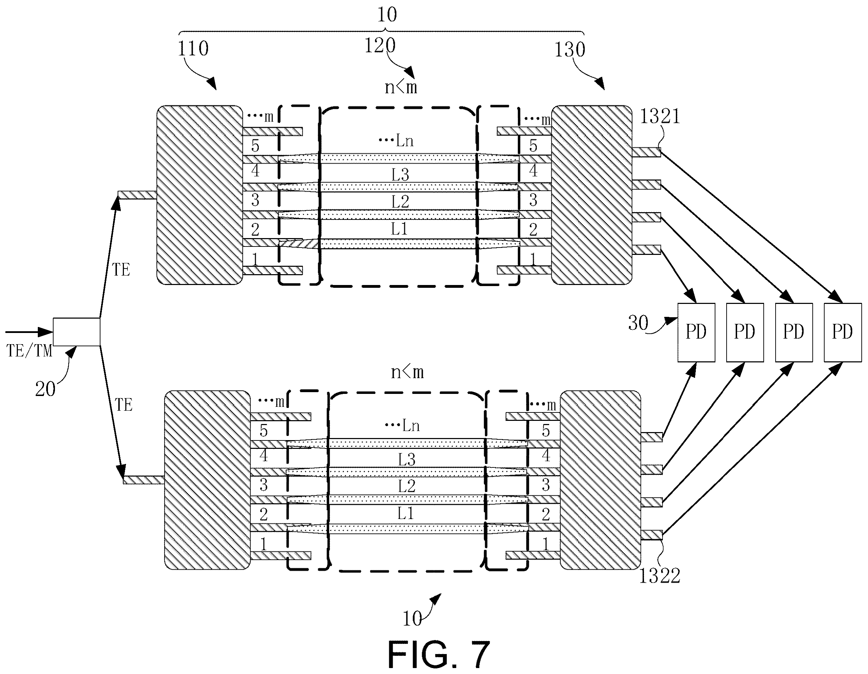

Please refer to FIG. 7, an integrated chip provided in an embodiment of the present application includes a polarization rotation beam splitter 20, two of the above array waveguide grating 10, and a photodetector 30.

The polarization rotation beam splitter 20 is used to split the input light into a first optical signal and a second optical signal. The two array waveguide gratings 10 are used to receive the first optical signal and the second optical signal, respectively, and the output coupler 130 of one of the array waveguide gratings 10 includes a first output channel 1321 for outputting the first optical signal, and the output coupler 130 of the other array waveguide grating 10 includes a second output channel 1322 for outputting the second optical signal. The photodetector 30 is connected to the first output channel 1321 and the second output channel 1322, respectively.

Specifically, the output coupler 130 of one of the array waveguide gratings 10 includes a plurality of first output channels 1321, and the output coupler 130 of the other array waveguide grating 10 includes a plurality of second output channels 1322. The photodetectors 30 correspond one-to-one to the first output channels 1321 and the second output channels 1322, respectively, and each of the photodetectors 30 is connected to the corresponding first output channel 1321 and the corresponding second output channel 1322, respectively.

By using the design of the polarization rotation beam splitter 20 for polarization multiplexing, the input light may be divided into a first optical signal and a second optical signal, and the first optical signal and the second optical signal may have the same polarization state (i.e., TE polarization). The first optical signal and the second optical signal are respectively transmitted to two ports of the photodetector 30 to be combined into an electrical signal.

In some embodiments, the materials of the input coupler 110 and the output coupler 130 are silicon, and the material of the waveguides 121 is silicon oxynitride or silicon nitride. Since silicon has a higher refractive index and a larger difference between the TE mode and the TM mode of silicon, the integrated chip allows the conversion of polarization states in a smaller size. The first output channel 1321 and the second output channel 1322 may be better connected to the photodetector 30, which is conducive to achieve the function of dual-polarization receiving ends in a smaller size and solving the issue of temperature drift. In addition, the array waveguide grating 10 adopts two materials, which may well reflect the respective advantages of each of the two materials, and take into account the solution of the issue of higher insertion loss of the star coupler and the issue of larger phase error caused by the sidewall roughness of the waveguides 121 of the waveguide array 120, so that the insertion loss of the array waveguide grating 10 is lower.

An optical communication system provided by an embodiment of the present application includes the above integrated chip.

Each of the technical features of the above embodiments may be arbitrarily combined. To make the description concise, not all possible combinations of each of the technical features in the above embodiments are described. However, as long as there is no contradiction in the combination of these technical features, these technical features should be considered to be within the scope of the specification.

The above embodiments only express several implementation modes of the invention, and the description thereof is more specific and detailed, but should not be understood as limiting the scope of the invention patent. It should be pointed out that, for those skilled in the art, several modifications and improvements may further be made without departing from the concept of the invention, which all fall within the scope of the invention. Therefore, the scope of the patent of the invention shall be based on the attached claims.

## Claims

1. An array waveguide grating, **characterized in that**, comprising an input coupler, a waveguide array, and an output coupler;
the waveguide array is coupled between the input coupler and the output coupler, the waveguide array comprises a plurality of waveguides, the input coupler is used for allocating received optical signals to the plurality of waveguides, the plurality of waveguides are used for guiding allocated optical signals, and the output coupler is used for coupling the optical signals transmitted on the plurality of waveguides;
wherein the input coupler has a first refractive index, the plurality of waveguides have a second refractive index, the output coupler has a third refractive index, and the first refractive index and the third refractive index are both greater than the second refractive index.

2. The array waveguide grating according to claim 1, **characterized in that**, the first refractive index and the third refractive index are both greater than 3;
the second refractive index is less than 2.5.

3. The array waveguide grating according to claims 1 or 2, **characterized in that**, the input coupler is manufactured by adopting a high-precision photolithography process; and/or
the output coupler is manufactured by adopting a high-precision photolithography process.

4. The array waveguide grating according to claim 3, **characterized in that**, materials of the input coupler and the output coupler both comprise silicon.

5. The array waveguide grating according to claims 1 or 2, **characterized in that**, a material of the waveguide comprises a temperature-insensitive material.

6. The array waveguide grating according to claim 5, **characterized in that**, a material of the waveguide comprises silicon nitride or silicon oxynitride.

7. The array waveguide grating according to claims 1 or 2, **characterized in that**, a number of the waveguides is n, the input coupler is used to allocate a received light into m optical signals and couple the m optical signals to the n waveguides for transmission, and the output coupler is used to couple the optical signals transmitted on the n waveguides and output p optical signals; wherein m, n, and p are all positive integers greater than 1, and m is greater than or equal to n.

8. The array waveguide grating according to claim 7, **characterized in that**, m is greater than n, the input coupler comprises n first coupling channels, the output coupler comprises n second coupling channels, and the waveguides are coupled between the first coupling channels and the second coupling channels in a one-to-one correspondence; the input coupler further comprises monitoring channels and/or dumping channels, and a total number of the monitoring channels and the dumping channels is m-n.

9. The array waveguide grating according to claim 8, **characterized in that**, the waveguides comprise two gradient sections respectively coupled to the corresponding first coupling channel and the corresponding second coupling channel; the first coupling channel comprises a first portion coupled to a bottom side of the corresponding gradient section, and the second coupling channel comprises a second portion coupled to a bottom side of the corresponding gradient section;
along a longitudinal extension direction of the waveguides pointing to a side away from the input coupler, a width of the gradient section coupled to the input coupler is gradually increased, and a width of the gradient section coupled to the output coupler is gradually decreased; a width of the first portion is gradually decreased, and a width of the second portion is gradually increased; or along a direction from the input coupler to the output coupler, a thickness of the gradient section coupled to the input coupler is gradually increased, and a thickness of the gradient section coupled to the output coupler is gradually decreased; a thickness of the first portion is gradually decreased, and a thickness of the second portion is gradually increased.

10. The array waveguide grating according to claims 1 or 2, **characterized in that**, cross sections of the plurality of waveguides are all configured as squares.
